# EUROPEAN PATENT SPECIFICATION

(11) **EP 0 610 252 B1**
(45) Date of publication and mention of the grant of the patent: **28.05.1997**
(21) Application number: 92921011.0
(22) Date of filing: 30.09.1992
(51) Int. Cl.: F24J 2/52

(54) **RADIANT ENERGY COLLECTING APPARATUS**
ANLAGE ZUM SAMMELN VON STRAHLUNGSENERGIE
APPAREIL COLLECTEUR D'ENERGIE DE RAYONNEMENT

(30) Priority: 06.11.1991 AU PK9313/91; 21.05.1992 AU PL2536/92
(43) Date of publication of application: 17.08.1994
(73) Proprietor: YEOMANS, Allan James, Surfers Paradise, QLD 4217 (AU)
(72) Inventor: YEOMANS, Allan James, Surfers Paradise, QLD 4217 (AU)
(74) Representative: Gee, David William
(86) International application number: PCT/AU92/00520
(87) International publication number: WO 93/09390

(56) References cited:
- AU-A- 7 777 691
- BE-A- 773 186
- DE-A- 3 633 172
- US-A- 4 159 629
- US-A- 4 219 387
- US-A- 4 315 500
- PATENT ABSTRACTS OF JAPAN, C-199, page 87, JP-A-58-156391 (MITSUI ZOSEN K.K.) 17 September 1983 (17.09.83)

## Description

### TECHNICAL FIELD

The present invention relates to radiant energy collecting apparatus and in particular aspects to solar energy collecting apparatus, means for facilitating alignment of such apparatus with the sun, means for protecting said apparatus in inclement weather conditions and means of stabilizing said apparatus.

### BACKGROUND OF THE INVENTION

To utilize solar energy for heating or for electricity generation it is generally necessary to concentrate the solar radiation to obtain higher temperatures in the energy storage and transport medium.

There are various methods used to concentrate the solar radiation. One method utilizes a circular mirror of parabolic section with the centre line of the dish pointing at the sun. The parabolic mirror must be suitably mounted to permit constant movement to follow the arc of the sun through the sky.

Additionally, the alignment of the arc of the sun through the sky will change from day to day as the declination of the sun changes from summer solstice to the winter solstice. Complex mechanisms are required to fulfill these requirements.

In the above method, the solar energy is concentrated into a small single focus point where a suitable heat absorber is mounted and it is difficult to transport this energy to a utilization point.

In another system, long parallel mirrored troughs having a parabolic cross-section are aligned with the sun. In this system, the concentration occurs at a focus line parallel with the alignments of the collecting troughs. The mirrored troughs are either formed by one piece parabolic mirrors or a series of mirrors. In either case it is important from the point of view of focussing and efficiency to support the mirrors or series of mirrors so that they do not move out of alignment with the collectors which are arranged at the focus line of the parabolic trough. Large and accurately formed structures are generally required for this purpose.

The collecting troughs may be aligned in a North/South direction and the troughs are so mounted as to permit them to follow the movement of the sun through the course of the day. Complex mechanisms are also required to fulfill this requirement.

The solar energy is then generally collected in a pipe containing a suitable heat absorbing liquid, the pipe being mounted at the focus line of the parabolic reflecting troughs.

In the trough collecting system, the troughs can also be mounted in an East-West alignment and it is then necessary to align the troughs to the arc line of the sun once each day to allow for change in declination. Complex mechanisms are also required to control this alignment.

In mounting parabolic reflecting troughs in either the North-South or the East-West configuration, the troughs are adjusted to maintain their focus on the sun by pivotally mounting on an axis parallel to the focus line of the mirrored troughs and generally requiring a multiplicity of rotating bearings and associated mounting structures.

It is also generally necessary to arrange the reflecting surfaces of solar energy collecting apparatus so that they are not subject to the possibility of damage caused by such things as hail. This is often achieved by the use of high quality and consequently expensive toughened glass in the construction of the reflecting mirrors. Additionally as a protection the mirrored surfaces often need to be turned away from the direction of on coming hail.

US Patent No. 4159629 discloses a solar energy collecting apparatus in which an array of trough like reflectors are supported in a boat which follows or track movement of the sun. The reflectors however in this apparatus are exposed to possible damage from hail or other inclement weather conditions.

Belgium Patent document No. 773186 discloses a floating platform for docking of water craft and which is submergible beneath the water level so as to be protected against inclement weather. This platform however is not designed for radiant energy collecting applications.

It is an object of the present invention to overcome or substantially ameliorate one or more of the above described disadvantages.

### SUMMARY OF THE INVENTION

In one aspect of the present invention, the present invention provides a radiant energy collecting apparatus , comprising:
a fluid reservoir;
a platform floating on fluid in said fluid reservoir;
means for moving said platform on said fluid;
radiant energy collector means supported on said platform, said collector means carrying an energy transfer-medium;
reflector means on said platform positioned to reflect radiant energy towards, and concentrate solar energy on, said radiant energy collector means; and
characterised by means for selectively submerging said reflector means beneath fluid to protect said reflector means against inclement weather conditions;
said collector means remaining above said fluid in which said reflector means are submerged so that energy is not lost from said collector means.

In one preferred form the fluid reservoir comprises a built reservoir such as a storage container, or dam containing a liquid such as water. Alternatively the fluid may comprise water in a river or ocean. The term "fluid reservoir" as used throughout the specification thus includes any of the arrangements described above, the term "reservoir" including natural or purpose built liquid containers.

In one embodiment of this invention, a low pressure is established beneath the platform to restrain the platform against the buoyant force on the platform by the liquid. In another embodiment the platform is provided with additional buoyant or flotation devices pr means so that when submerged by flooding it will move to a dynamically stable submerged position without excessive distortion or tipping.

In another aspect of the present invention, the flotation devices are secured to the platform for supporting the platform when the reflectors are submerged beneath fluid from the reservoir, and wherein the buoyancy of the flotation devices per unit height increases from bottom to top of the flotatio n devices.

In still another aspect of the present invention, the apparatus collects solar energy and the drive or pivoting means pivots the platform to track movement of the sun.

In yet another aspect of the present invention, the concentrators are a plurality of parallel and elongate d reflectors supported on the platform, where each reflector is parabolic to concentrate solar energy on a horizontal focal line, and the energy collectors are supported at the focal lines of the reflectors. Each parabolic reflector is preferably constructed of a plurality of parallel elongated reflective elements, such as mirrors which may be arcuate or flat in cross section. Where used on a body of liquid, the platform is preferably constructed of a flexible buoyant material so that it will conform to the flat surface of the liquid which forms a planar datum plane so that the reflectors will be maintained focussed on their associated collectors.

In another aspect of the present invention, fluid feed impellers are supported beneath the platform within the reservoir and communicate with ports through the platform for pumping fluid onto the platform and reflectors. In still another aspect of the present invention, opposing fluid impellers are associated with each fluid feed impeller, the opposing impellers being operable with the feed impellers to force fluid in an opposing direction to the feed impellers, with deflectors being disposed between the feed impellers and the opposing impellers.

In yet another aspect of the present invention, a duct is associated with one or both impellers and is configured so as to direct fluid adjacent one or both impellers in a vertical direction and direct fluid at the other end at least partially in a horizontal direction.

It is another preferred object of the present invention to provide a radiant energy collecting apparatus in which the solar concentrators may be easily maintained in alignment with the sun.

It is yet another preferred object of the present invention to provide a radiant energy collecting apparatus which may be simple and easily assembled for collecting radiant energy over large surface areas.

Still another preferred object of the present invention is to provide an inexpensive radiant energy collecting apparatus which is protected against breaking or other degradation which can result from excessive distortion.

### BRIEF DESCRIPTION OF THE DRAWINGS

A preferred embodiment of the invention will now be described with reference to the drawings in which:-
Fig. 1 is a plan view of one form of solar energy collecting apparatus according to the present invention;
Fig. 2 is a schematic plan view of the apparatus showing details of the floatation control system for the apparatus;
Fig. 3 is a sectional elevation of the apparatus along line A-A of Fig. 2;
Fig. 4 is a plan view of one concentrating mirror system for use in the apparatus;
Fig. 5 is an end view of the system shown in Fig. 4;
Fig. 6 is a side elevational view of the system of Figs 4 and 5;
Fig. 7 is a plan view showing a buoyant support system for the platform; and
Fig. 8 is a sectional view along line B-B of Fig. 7. showing the platform submerged.
Fig. 9 is a plan view of one large raft system of ten individual parallel parabolic mirror systems in which the individual mirrors and overhead superstructure have been omitted for clarity;
Fig. 10 is a sectional elevational view of the raft system along lines C-C of Fig. 9 and Fig. 11;
Fig. 11 is a partial plan view of the raft and mirror system as depicted in Fig. 9 and in the general area of view C-C of Fig. 9;
Fig. 12 is a side elevation of a water impeller assembly with the present invention;
Fig. 13 is a partial plan view of the raft and mirror systems including the impeller assembly of Fig. 12; and
Fig. 14a-c are end elevation, inverted plan, and side elevation views, respectively, of one of the flotation blocks illustrated in Fig. 10.

### Description of the Preferred Embodiment

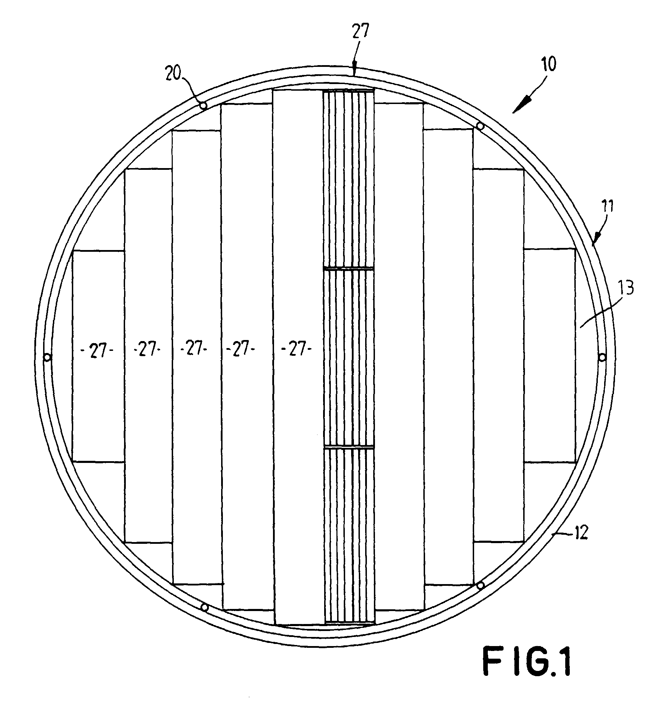

Referring to the drawings and firstly to Figs. 1 to 3, there is illustrated solar energy collecting apparatus 10 according to one preferred form of the present invention, including a circular water container or reservoir 11, which may for example comprise a pond or a dam or a purpose built container, including an outer wall 12 which encloses and contains water within the container 11. A platform 13 is located within the container 11 so as to float on water 14 contained therein which is at the level 15. The platform 13 may be constructed of a buoyant material such as a foam plastics material or be mounted on a layer of such material. Alternatively, the platform 13 may be formed with sealed air reservoirs or provided with other means to make it buoyant.

A hoop 16 is attached to or formed integrally with the platform 13 so as to form a generally water tight skirt around the outer diameter of the platform 13, the hoop 16 extending below the underside of the platform 13.

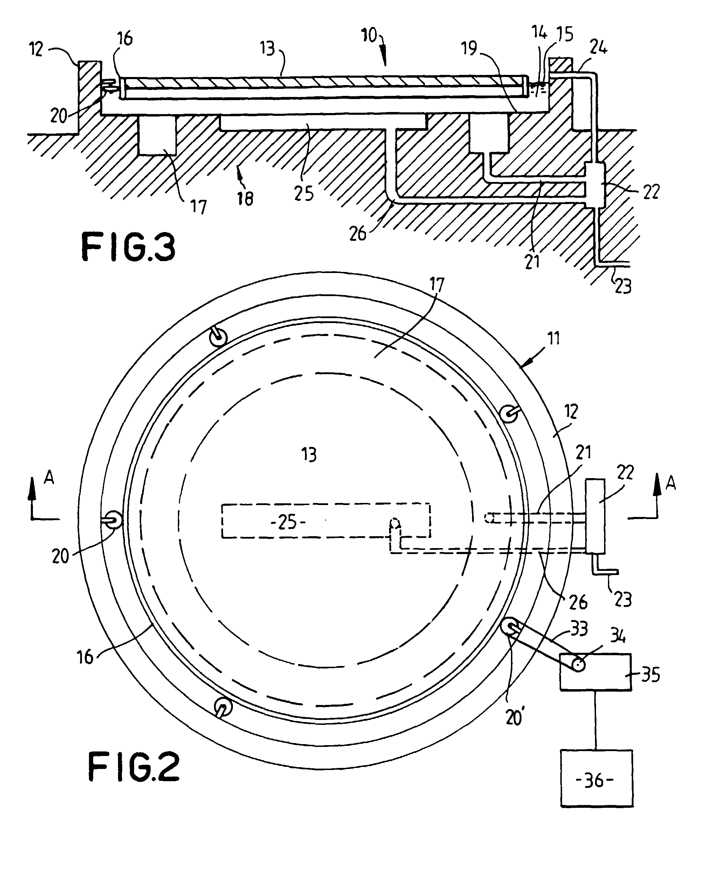

As shown in Figs. 2 and 3, a trench 17 is constructed in the base 18 of the container 11 and is generally continuous around the container 11 so as to be of annular form. The outer diameter of trench 17 is less than the diameter of the hoop 16 thus forming a land 19 on which the hoop 16 will rest when water is withdrawn from the container 11.

Guide rollers 20 are mounted around the inside diameter of the container walls 12 so as to maintain the relative position of the platform 13 by pressing against the hoop 16. One or more of the rollers 20 may be motor driven to conveniently rotate the platform 13 to control the alignment of the solar energy collecting apparatus 10 with the sun.

One or more outlet pipes 21 are connected to suitable pump and valve units 22 to allow water to be pumped out from under the platform 13 to above the platform 13 by flow through outlets 24 or to an auxiliary water storage pond (not shown), via pipes 23. The water flow rates and directions can be controlled by the pump valve units 22. The base 18 of the container 11 is also provided with a trough 25, the trough 25 communicating with the pump valve units 22 via a pipe 26.

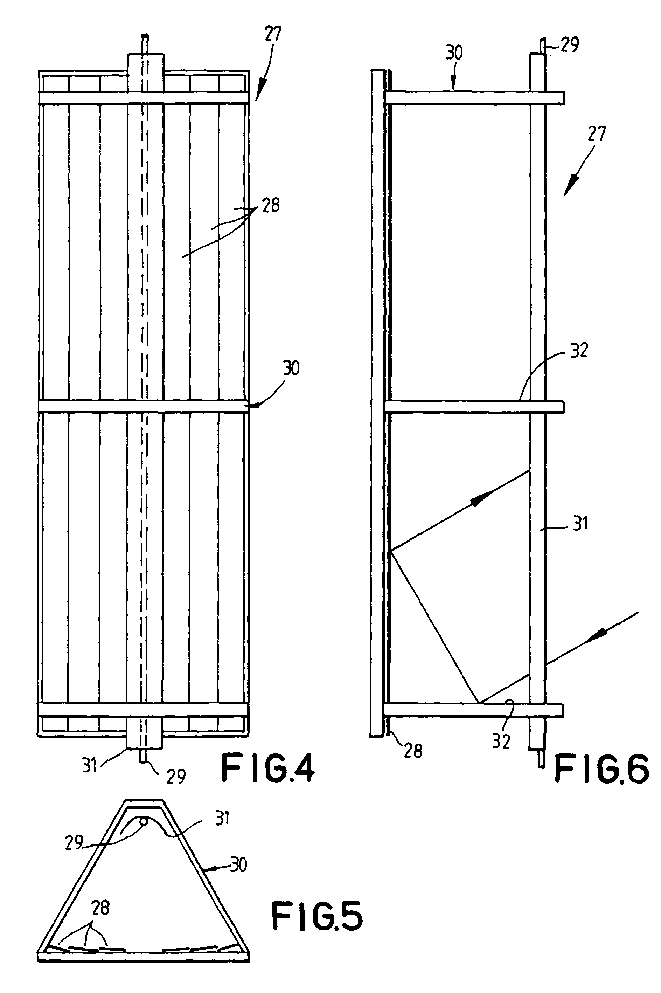

Supported on the platform 13 are a plurality of solar concentrators 27 arranged as shown in Fig. 1 in a side-by-side attitude and each comprising as shown more clearly in Figs. 4 and 5 a series of parallel mirrors 28 either of curved form or planar form and angled so as to act as and define one large elongated parabolic mirror. These mirrors 28 are arranged to focus the sunlight onto an overhead energy collector pipe 29, such as a black pipe, the collector pipe 29 being mounted on a suitable frame 30 of triangular form above the mirrors 28. The collector pipes 29 are suitably coupled together to allow for the collection of the heat energy in a known manner and subsequent utilization in any manner common to the trade, such as an energy supply for a steam turbine driven electricity generating plant. For this purpose, the collector pipes 29 may carry a heat or energy absorbing medium such as heat absorbing oil. The collector pipes 29 of the respective concentrators 27 may be coupled together for example through a manifold and the heated medium conveyed by the pipes 29 used for steam generation purposes. Alternatively, the medium carried by the collection pipes may be circulated in a closed system and heat exchangers used to extract the heat from the medium.

To compensate for slight errors in the alignment of the concentrating mirrors 28, an arcuate reflector 31 is positioned above the collecting pipe 29 and so formed so as to act as a non-imaging optical concentrator.

To improve heat collection from elements of the frame 30 and other components of the structure which may intercept the radiant energy which would otherwise directly impinge upon the concentrating mirrors 28, mirrored or reflective surfaces 32 (see Fig. 6) are attached to or may form part of such components, the surfaces 32 being set substantially at 90 degrees to the focus line of the mirrors 28 to cause the radiant energy of the sun to reflect therefrom onto the mirrors 28 and thence to focus onto the collector pipe 29 or reflector 31 as indicated by the arrows in Fig. 6.

The platform 13 in its preferred form is constructed of a flexible buoyant material such as a lightweight thin foamed plastics material. The platform 13 when floating will thus maintain a flat planar attitude due to its being flexible and conforming to the flat surface of the liquid upon which it is floating. The concentrating mirrors 28 will thus maintain a correct focussed or substantially focussed attitude relative to their associated collector pipes 29. Any movement of the platform say due to wave motion will result in a corresponding movement of the collector pipes 29 so they remain at or substantially at the focus of their associated mirrors 29. Use of a lightweight flexible buoyant material for the platform 13 significantly reduces the cost of the system whilst ensuring that the mirrors are maintained in alignment with their collectors.

As stated above, to cause rotation of the platform, one or more of the rollers 20 may be motor driven. For this purpose, one of the rollers 20' may be coupled through a belt 33 to a drive roller 34 which is adapted to be driven by a servomotor or other actuating means 35. Actuation of the servomotor 35 is controlled by a tracking apparatus 36 of any known type such as apparatus which employs phototransistors or other light sensitive means and a shading member which creates a shadow over the light sensitive means in accordance with their alignment with the sun. Of course, many different alternative systems may be employed for controlling or causing movement of the platform 13 in accordance with movement of the sun such as a timing system.

In use, when the sun rises in the East, the tracking apparatus 36 will cause through the servomotor or other actuating means 35, drive pulley 34, belt 33, and wheel 20' rotation of the floating platform 13 to move the concentrators 27 so that their longitudinal axes are directed towards the sun's longitudinal meridian at the horizon. Thus the longitudinal axes of the concentrators 27 lie in vertical planes which intersect the sun. As the sun moves across its arc, its change in longitudinal meridian at the horizon will be tracked by the concentrators 27 with the platform 13 floating on the liquid 14 in the container 11 and carrying the concentrators 27 being rotated by its drive system so that the longitudinal axes of the concentrators 27 remain aligned with the sun. Thus at all times when the sun is up, the collection apparatus 10 is exposed to maximum radiant energy from the sun to thereby maximize energy collection. The use of the floating platform 13 allows for easy and convenient movement of the apparatus 10 to achieve and maintain alignment of the concentrators 27 with the sun.

Should a risk of hail or similar damaging weather phenomena look imminent, then pump 22 is turned on and water is pumped at high volume from the water container 11 to the storage pond causing the platform 13 to lower. The bottom of the skirt or hoop 16 will then come in contact with the base land 19 of the container 11 to produce a general sealing effect. A slight pressure reduction will then occur under the whole platform at which time water is then caused to flow out through pipe 24 to the area above the platform 13. The pressure reduction under the platform 13 is maintained sufficiently to prevent the platform 13 from tending to float up above the water being pumped in at 24 so that the water covers the platform 13 and associated solar concentrators 27 to prevent damage thereto.

Alternatively, rather than rely on the pressure reduction under the platform 13 to maintain it submerged, mechanical means may be employed for this purpose. For example, holding pins or members mounted to the outer wall 12 of the container 11 may be extended inwardly after platform submergence to maintain the solar concentrators 27 submerged and the reflective surfaces or mirrors 28 of the concentrators 27 protected. To permit the platform 13 to again float, the pins or members may be withdrawn. As yet another alternative, the platform may be provided with one or more air chambers or reservoirs which may be filled with water to sink the platform or filled with air to enable the platform to float.

Water may be directed back to the container 11 by directing the water through pipe 26 into the trough 25. As a degree of flexibility will exist in platform 13, directing water to the trough 25 positioned centrally under the platform 13 will cause the central area of the platform to become slightly elevated and thus ensure efficient and rapid draining of water when re-exposure of the concentrators 17 to the sun is required.

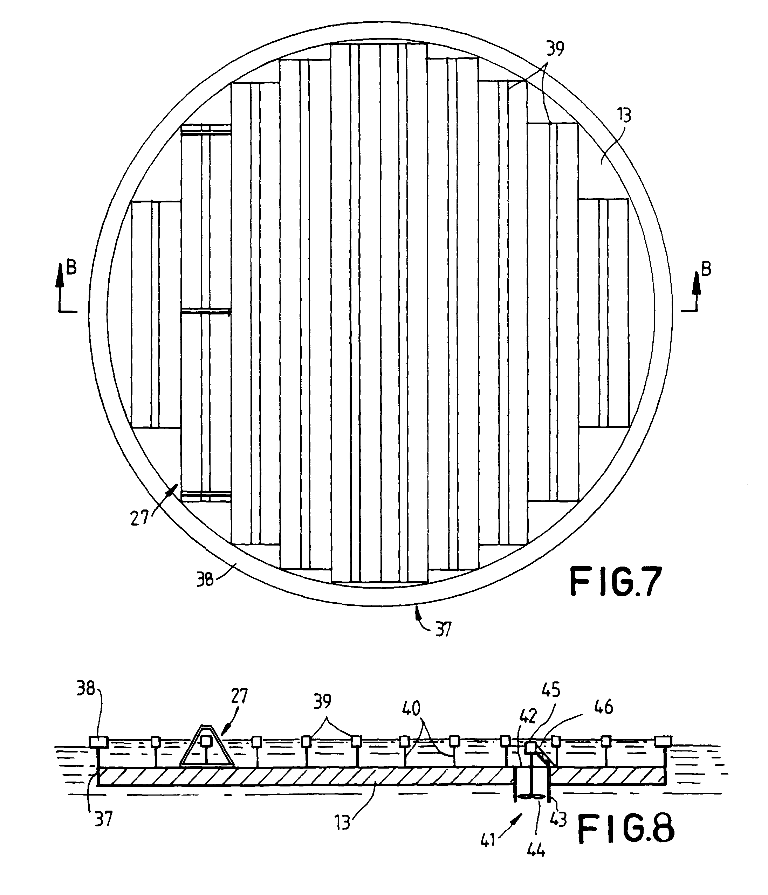

Figs. 7 and 8 illustrate a buoyant support system for the platform 13 when the latter is arranged on a large body of water, such as on a lake, bay, river or the like, the platform 13 including as before a plurality of side-by-side concentrators 27, only one of which is fully shown. The platform 13 in this embodiment is provided about its periphery with an upstanding rim 37 which terminates at its upper edge in a buoyant member, or alternatively a series of buoyant members 38. In the embodiment illustrated the member 38 is of annular form and may comprise foam plastics material which extends fully about the rim 37. Further buoyant members 39 may be associated with each parabolic concentrator 27 and located at the central normally shaded portion of the concentrators 27. Preferably the members 39 are mounted on stems 40 so as to be spaced from the concentrators mirrors 28. The members 39 preferably comprise elongated lengths of foam plastics material and the stems 40 rigidly support the members 39. Alternatively, the stems 40 may comprise short lengths of wire or other flexible attachment means.

Where it is desired to sink the platform 13 as shown in Fig. 8 in say inclement weather conditions, water is simply pumped onto the top surface thereof by any suitable means, such as a conventional pump. Alternatively, the platform 13 may be provided with one or more water supply and drainage assemblies 41 as shown in Fig. 8. Each assembly comprises an opening 42 through the platform 13 aligned with an annular skirt 43 which extends to the underside of the platform 13. Arranged within the skirt 43 and submerged in the liquid within the skirt 43 is an impeller 44 coupled to a drive motor 45 supported in any suitably fashion such as by a gantry 46 on the top side of the platform 13. When the motor 45 is driven in a first direction, water will be forced from the underside of the platform 13 to the topside thereof through the skirt 43 and opening 42. When it is desired to drain the platform 13, the motor 45 is driven in the opposite direction to cause reverse rotation of the impeller 44 and water to be pumped out through the opening 42.

Water pumped onto the platform 13 will be contained thereon by the rim 37 so that the platform 13 will begin to sink. Should the sides of the platform 13 tend to sink first they will be supported by the buoyant rim member 38. Water can be continued to be pumped over the platform 13 to submerge the concentrators 27 until a dynamically stable equilibrium is achieved with the regions of the platform 13 between the rim 37 being supported by the buoyant members 39. The platform 13 will again rise to the surface of the body of water so as to expose the concentrators 27 to the sun after the water contained by the rim 37 is drained.

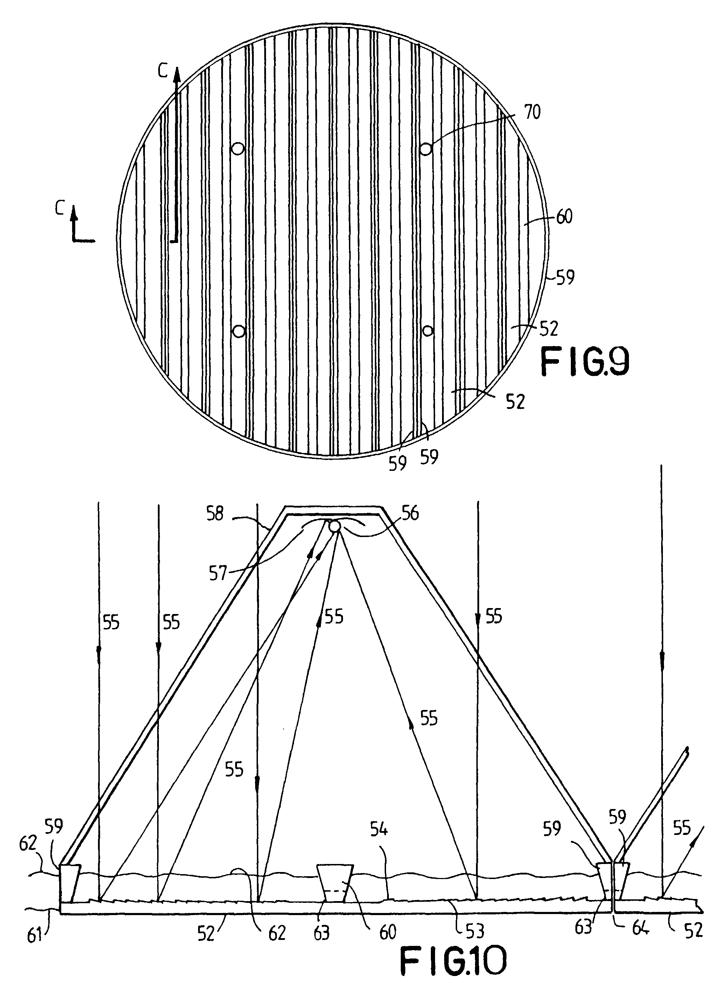

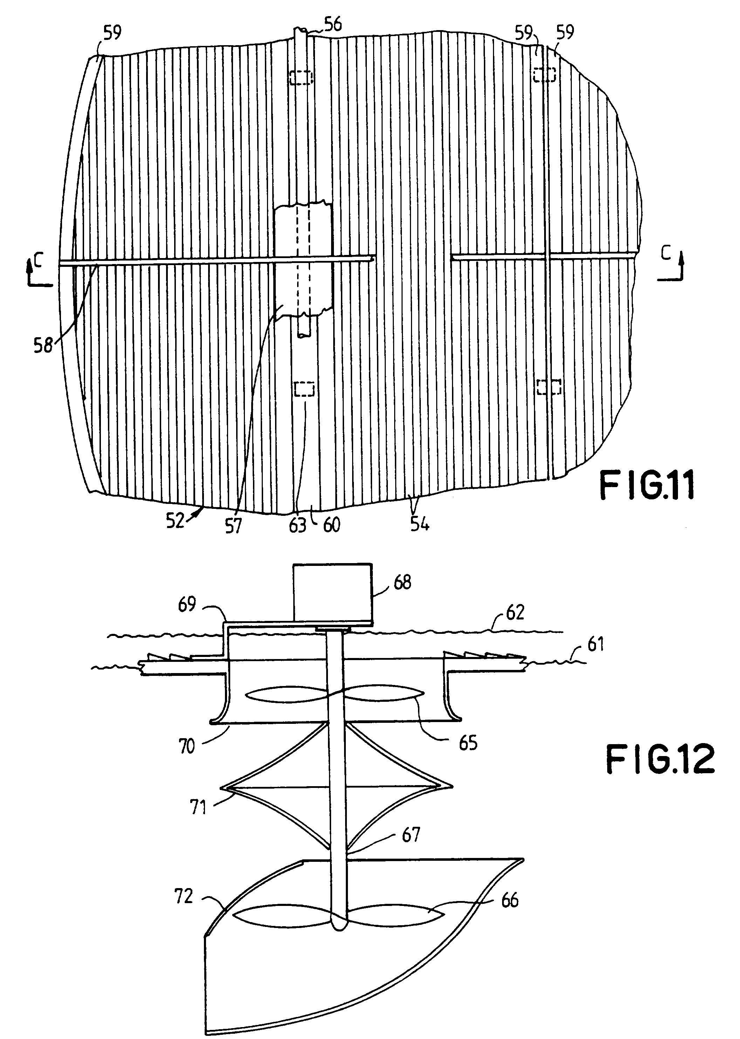

Referring now to Fig. 9, there is illustrated an alternative form of the invention in plan view comprising a typical raft in which the plurality of individual reflector mirrors and the overhead solar collecting systems and their mountings have been omitted. These elements are illustrated in Fig. 10, which shows the buoyant raft 52 in which grooves or flats 53 have been formed at varying angles and on which flat strips of mirrors 54 are attached. These mirrors 54 and their allied grooves are set at such an angle as to concentrate the rays of radiant energy (typically sunlight) 55 onto a solar collecting pipe 56. Further, should the alignment of the mirrors 54 be slightly inaccurate, the sunlight rays 55 will impinge on reflecting screen 57 and in turn onto the solar collecting pipe 56.

The solar collecting pipe 56 and reflecting screen 57 are mounted on a suitable frame 58 which is in turn mounted directly to the raft 52. Alternatively, the frame 58 can be indirectly mounted to the raft, as for example by mounting the frame 58 to the flotation blocks 59 which themselves are mounted directly to the raft 52.

In normal operation, the raft 52 would float in a reservoir with a relative water level as indicated by reference number 61. (Of course, the reservoir could be any suitable large body of water, whether an artificial pool, a natural bay, an estuary or a dam.

If weather conditions indicate that the mirrors 54 should be protected from possible damage by hail, then water from the reservoir is pumped by suitable means onto the top surface of the floating raft 52.

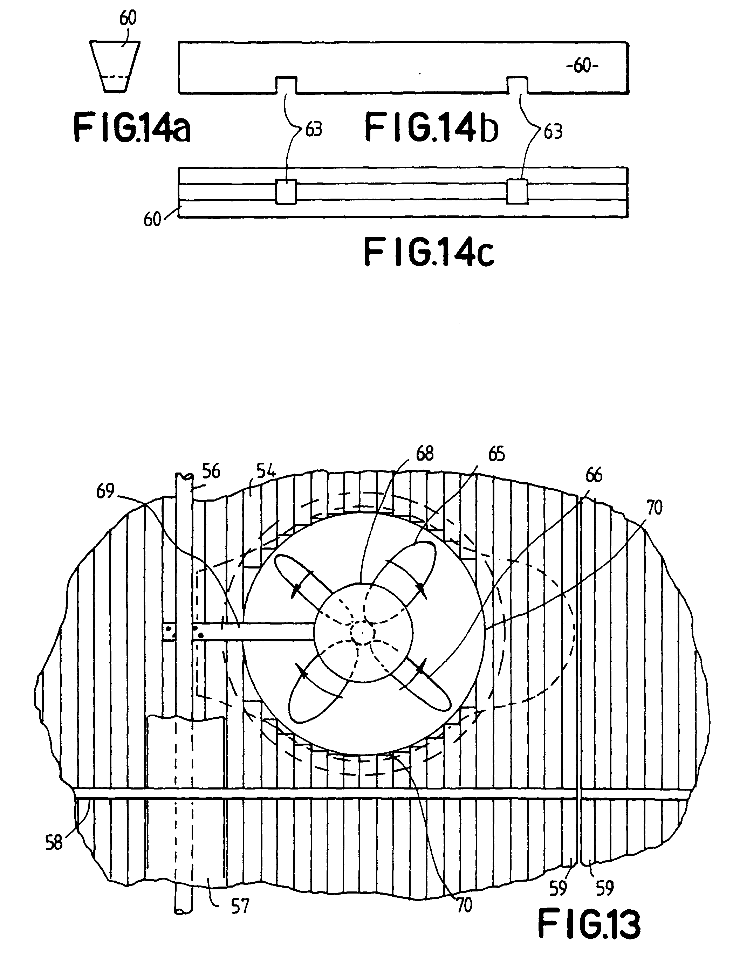

The outer diameter of the raft 52 (or the outer edge should it not be a round configuration) has attached to it or forming part of the raft 52 a small wall defined by the flotation block 59 composed of a suitable flotation medium such as foamed polystyrene. Also mounted on and rigidly attached to the raft 52 along their length are additional longitudinal flotation blocks 60. These flotation blocks 60, as best illustrated in Figs. 14a-c, have cut outs or slots 63 in their lower surface (see also Fig. 11).

Further, it should be understood that while the raft 52 may itself be unitary, it is also within the scope of the present invention to form large rafts 52 by combining long parallel individual raft structures, which can be attached together in any suitable manner, as shown for example at reference numeral 64 in Fig. 10.

Located within the general area of the raft 52 and attached thereto adjacent spaced shrouded ports 70 through the platform 52 are impellers 65 and 66 mounted on a drive shaft 67 which is driven by a suitable motor 68 itself suitably mounted, as by the bracket 69 shown, to the raft 52 (see Figs. 12 and 13). The upper impeller 65 and lower impellers 66 preferably have an opposite pitch to their blades for a purpose to be described hereafter.

The ports 70 are located in the base of the raft 52 so as to permit the flow of water from under the raft 52 through to above the raft 52, and vice versa. In the preferred embodiment as shown in Fig. 12, the raft 52 is itself made of a sufficiently buoyant material so that it will support the entire apparatus with the mirrors 54 above the water level. Therefore, the ports 70 can be open as shown.

If, alternatively, the raft 52 requires additional buoyancy to maintain the mirrors 54 above the water level during normal operation, the raft 52 can be configured much like a boat with an outer rim enclosing a volume which will displace sufficient fluid so that the water level around the raft will not rise above the top of the rim (and thus, the mirrors 54 will not necessarily be covered with fluid even though they may be disposed at a lower level than the fluid level around the raft). In this alternative embodiment, the ports would preferably be closed during normal operation. This could be accomplished by providing suitably controlled valving to open or close the ports as required during operation.

Additional ducting or shrouding 71 may also be included to assist the directional flow of the water, the ducting 71 being located intermediate the impellers 65 and 66. Another ducting system 72 is preferably provided adjacent one or more lower impellers 66, which ducting system 72 is suitably mounted so as to direct the vertical flow of water through impeller 66 into a horizontal flow so as to permit the movement of the raft 52 to be controlled. Control can be accomplished in this manner by providing a single ducting system 72 which can be selectively directed, or alternatively can be accomplished by providing the system with multiple impellers 66, each directed differently, with movement then being controlled by operating only selected impellers.

Of course, it would be within the scope of at least one aspect of the present invention to provide an external drive for the raft 52. For example, if the raft 52 were located in a pool where it could reliably be positioned adjacent a side of the pool, movement of the raft 52 to follow the movement of the sun could be accomplished by a suitable drive at the side of the pool and engaging the raft, as shown for example in the above described embodiment of Figs. 2 and 3.

Operation of the above described preferred embodiment of the apparatus is thus as follows.

In normal operation, when the mirrors 54 are exposec to the sun, the relative water level between the raft 52 and the reservoir in which the raft 52 is floating would be as indicated at reference numeral 61. Orientation of the raft 52 can be suitably controlled in response to the condition of the sun, as previously described, by the ducting 72.

Should weather conditions indicate the possibility of damage to the mirrors 54 caused by such things as hail, then the motors 68 would be activated so to force water in the reservoir up through ports 70 onto the top surface of the raft 52.

The natural tendency is for water to concentrate in particular areas so that the raft 52 would be submerged to a greater extent at the location of the ports 70, with the mirrors 54 in other, higher, areas thereby still exposed to danger from the weather. However, the construction of the flotation blocks 59, 60 are such that they generally taper from their base to a wider section at their top. This tapered configuration causes the concentration of water in any particular area to spread out over the surface of the raft and ensure that an even depth of protective water will be provided over all of the mirrors 54. Thus, the mirrors 54 would all be reliably protected by water at a level such as indicated by reference numeral 62 in Fig. 10. In fact, the tapered configuration of the flotation blocks 59, 60 ensures that a consistent and even depth of water is maintained throughout the flooding process. (Further, the even flooding of water over the raft 52 is assisted by the openings 63 cut into the bottom of the flotation blocks 59, 60, which openings 63 permit the water being pumped onto the raft 52 to circulate over the entire raft 52).

It should also be understood, however, that the flotation blocks 59, 60 could alternatively provide the desired graduated buoyancy by being stepped rather than continuously tapered or tapered on one side only. In such a configuration, however, it is highly preferred that the horizontal cross-sectional area of the flotation blocks be equal one with another at any particular distance from the raft 52.

Throughout the period of risk to the mirrors 54, the motor 68 would be kept operating at sufficient speed so that the upper impellers 65 would maintain the level 62 of protective water over the mirrors 54.

At the cessation of the risk to the mirrors 54, the motor 68 may be turned off. Due to the natural buoyancy of the raft 52, stopping the impeller 65 will permit a reverse flow back out through ports 70, so that the raft 52 will eventually refloat itself with the mirrors 54 uncovered and thus again be operable to reflect solar energy to the collecting pipe 56. Further, in the preferred embodiment, the attachment of the individual sections forming the raft 52 (as shown at reference numeral 64) is generally such that leakage could occur therethrough as well (although such leakage should obviously be minimized sufficiently that the impellers 65 will be able to maintain the water at the desired level 62 during the weather period when the mirrors 54 require protection). Of course, it should also be appreciated that the operation of the flotation blocks 59, 60 in maintaining a level surface over the raft 52 will further assist in preventing pockets of water from being trapped on the raft 52 and thereby inhibiting the efficient operation of the apparatus.

Of course, to accelerate the flotation process, the motor 68 could be reversed causing the impeller 65 to force a downward flow of water through port 70. Such an operation would also be used with the previously described alternative embodiment of the present invention (that is, where the raft is configured as a boat), where the impeller 65 would thus function as a sump pump to remove the water from the raft.

During the operation of the impellers 65, the flow of water up through the ports 70 can tend to locally submerge the raft in the area adjacent to the ports 70 and impellers 65. The opposite pitch of the other impellers 66 rotating on the same drive shaft 17 prevents this operation however, by causing a counterbalancing upward force. By suitably selecting relative pitch and blade areas of the associated impellers 65, 66, the raft 52 can reliably be maintained in a level configuration despite the forces resulting from pumping fluid onto the raft during inclement weather.

Of course, if opposite rotation of the impellers 65, 66 is desired during removal of the water from the raft 52 following inclement weather, the vertical forces introduced by the two impellers 65, 66 reverse, with the bottom impellers 66 thereby providing counterbalancing forces which prevent the raft 52 from raising up at the location of the ports 70 (which configuration would undesirably tend to concentrate the fluid on the raft 2 in low areas away from the ports 70).

Of course, because of the opposite action of the coaxial impellers 65, 66, the additional ducting 71 desirably operates to separate the opposing flow of fluid generated by their rotation.

The present invention thus provides a solar energy collecting apparatus which is relatively inexpensive to construct and provides an efficient system for maximizing radiant energy received from the sun. The apparatus may be constructed of inexpensive and readily available materials and of a large size to suit commercial power generation purposes. Alternatively, the apparatus of the invention may be adapted for single household use. Whilst the solar concentrators and collectors have been described to be normally substantially horizontal, they may in some circumstances be inclined to the horizontal but still lie in use at right angles to vertical planes intersecting the sun.

Further, it should be understood that while the apparatus of the invention is particularly suited for collection of solar heat energy, the apparatus may also collect other forms of radiant energy which may be concentrated.

The liquid upon which the platform is supported for floating movement is preferably arranged within a reservoir, however, the liquid may comprise any other body of liquid such as water in a river, sea or other storage container.

Thus while the above has been given by way of illustrative embodiment of the invention, all such modifications and variations thereto as would be apparent to persons skilled in the art are deemed to fall within the broad scope and ambit of the invention as herein set forth in the appended claims.

## Claims

1. A radiant energy collecting apparatus (10), comprising:
a fluid reservoir (11);
a platform (13) floating on fluid in said fluid reservoir (11);
means for moving said platform (13) on said fluid (11); radiant energy collector means (29) supported on said platform (13), said collector means (29) carrying an energy transfer-medium;
reflector means (28) on said platform positioned to reflect radiant energy towards, and concentrate solar energy on, said radiant energy collector means (29); and
characterised by means for selectively submerging said reflector means (28) beneath fluid to protect said reflector means (28) against inclement weather conditions;
said collector means (29) remaining above said fluid in which said reflector means (28) are submerged so that energy is not lost from said collector means (29).

2. The apparatus of Claim 1, characterised in that said platform (13) is sufficiently buoyant to normally support said reflector means (28) above the fluid level of the body of fluid (11).

3. The apparatus of Claim 1 or Claim 2 characterised in that said submerging means comprises:
means (22,44) for pumping fluid onto said platform; and
means for maintaining said fluid on said platform (13) and over said concentrating means (27).

4. The apparatus of Claim 3, characterised in that said maintaining means comprises means (22) for establishing a low pressure beneath said platform (13) to secure said platform (13) beneath said level of fluid.

5. The apparatus of Claim 3, characterised in that said pumping and maintaining means comprise fluid feed impellers (44,65) supported beneath said platform (13), said fluid feed impellers (16) communicating with ports (42,70) through said platform (13).

6. The apparatus of Claim 5, characterised in that opposing fluid impellers (66) are associated with each fluid feed impeller (65), said opposing impellers (66) being operable with said feed impellers (65) to force fluid in an opposing direction to said feed impellers (65); and deflectors (71) between said feed impellers (65) and said opposing impellers.

7. The apparatus of Claim 6, characterised in that said feed impellers (65) have an opposite pitch from said opposing impellers (66), and associated feed impellers (65) and opposing impellers (66) are secured to and axially spaced on common vertically oriented drive shafts (67).

8. The apparatus of Claim 5, characterised in that said moving means comprises a duct (72) associated with at least one impeller (66) and connecting two duct openings, said duct (72) directing fluid through the opening adjacent the at least one impeller (66) in a vertical direction and directing fluid through the other opening at least partially in a horizontal direction.

9. The apparatus of any one of Claims 1 to 8, characterised in that the platform (13) includes a rim (37) therearound for normally separating fluid of said body of fluid (11) from the reflector means (27) on the platform (13).

10. The apparatus of any one of Claims 1 to 9, characterised in that flotation adjustment devices (60) are secured to said platform (13) for maintaining said platform (13) in a substantially horizontal attitude when said reflector means (28) are submerged beneath said fluid.

11. The apparatus of Claim 10, characterised in that the buoyancy of the flotation devices (60) per unit height increases from bottom to top of said flotation devices (60).

12. The apparatus of Claim 10 or Claim 11, characterised in that said floatation devices (60) are elongate and secured to said platform (13) along their length, said devices (60) being tapered outwardly from a narrow bottom side adjacent said platform (13) to a wider top side.

13. The apparatus of any one of Claims 1 to 12 wherein said reflector means (29) comprises parabolic reflectors having a focal line and wherein said collector means (29) are supported substantially at the focal line of respective reflectors (28).

14. The apparatus of Claim 13, characterised in that said reflector means (29) comprise a plurality of side-by-sid e elongated reflector elements (28) defining a substantiall y parabolic reflecting trough.

15. The apparatus of Claim 14 characterised in that said collector means (29) are supported by a framework (28) substantially at the focus line of the defined parabolic reflecting trough, said framework (30) further including reflectors (31) to direct radiant energy toward the collectors (29).

16. The apparatus of any one of Claims 1 to 15 characterised in that said collector means (29) compris e elongated pipes adapted to carry an energy transfer medium.

## Patentansprüche

1. Gerät (10) zur Sammlung von Energiestrahlung, bestehend aus:
einem Flüssigkeitsspeicher (11);
einer auf einer Flüssigkeit in besagtem Flüssigkeitsspeicher schwimmenden Plattform (13);
Mitteln zur Bewegung der besagten Plattform (13) auf der besagten Flüssigkeit (11);
einer auf der besagten Plattform (13) abgestützten Sammelvorrichtung (29) für Energiestrahlung, wobei die besagte Sammelvorrichtung (29) ein Energieübertragungsmedium trägt;
reflektierende Mittel (28) auf der besagten Plattform, die so angeordnet sind, daß Energiestrahlung reflektiert und Sonnenenergie auf besagte Energiesammelvorrichtung (29) gelenkt wird; und
gekennzeichnet durch Mittel für das selektive Eintauchen der besagten reflektierenden Mittel (28) unter den Flüssigkeitsspiegel, um die besagten reflektierenden Mittel (28) gegen schlechte Witterung zu schützen;
wobei die besagte Sammelvorrichtung (29) oberhalb der besagten Flüssigkeit bleibt, in die die besagten reflektierenden Mittel (28) eintauchen, so daß die besagte Sammelvorrichtung (29) keine Energie verliert.

2. Gerät gemäß Anspruch 1, dadurch gekennzeichnet, daß die besagte Plattform (13) genügend Auftrieb aufweist, um die besagten reflektierenden Mittel (28) normal über dem Flüssigkeitsstand des Flüssigkeitskörpers (11) zu halten.

3. Gerät nach Anspruch 1 oder Anspruch 2, dadurch gekennzeichnet, daß besagtes Mittel für das Eintauchen
Mittel (22,24) für das Pumpen von Flüssigkeit auf die besagte Plattform; und
Mittel für das Halten von Flüssigkeit auf der besagten Plattform (13) und über dem besagten Konzentrationsmittel (27).

4. Gerät gemäß Anspruch 3, dadurch gekennzeichnet, daß besagtes Mittel zum Halten der Flüssigkeit Mittel (22) für die Ausbildung eines Unterdrucks unter der besagten Plattform (13) aufweist, um die besagte Plattform (13) unter dem besagten Flüssigkeitsspiegel zu halten.

5. Gerät gemäß Anspruch 3, dadurch gekennzeichnet, daß besagtes Mittel für das Pumpen und Halten unter der besagten Plattform (13) abgestützte Förderschaufeln (44,65) für die Flüssigkeitszufuhr aufweist, wobei besagte Flüssigkeits-Förderschaufeln (16) durch die besagte Plattform Plattform (13) mit den Öffnungen (42,70) kommunizieren.

6. Gerät gemäß Anspruch 5, dadurch gekennzeichnet, daß gegenüberliegende Flüssigkeits-Förderschaufeln (66) mit jeder Flüssigkeitsfärderschaufel (65) zusammenwirken und die besagten gegenüberliegenden Förderschaufeln (66) in Zusammenwirkung mit den besagten Flüssigkeitsförderschaufeln (65) Flüssigkeit in die entgegengesetzte Richtung zu den besagten Flüssigkeitszufuhrschaufeln (65) verdrängen; und
Leitplatten (71) zwischen den besagten Zufuhr-Färderschaufeln (65) und den besagten gegenüberliegenden Schaufeln.

7. Gerät gemäß Anspruch 6, dadurch gekennzeichnet, daß besagte Förderschaufeln (65) eine der Steigung der gegenüberliegenden Schaufeln (66) entgegengesetzte Steigung aufweisen, und die zusammenwirkenden Förderschaufeln (65) und gegenüberliegenden Schaufeln (66) in axialem Abstand zueinander an gemeinsamen, lotrecht verlaufenden Antriebswellen (67) befestigt sind.

8. Gerät gemäß Anspruch 5, dadurch gekennzeichnet, daß besagtes Mittel zur Bewegung einen wenigstens einer Förderschaufel (66) zugeordneten Kanal (72) aufweist, der zwei Kanalöffnungen verbindet, wobei besagte Kanalöffnung (72) Flüssigkeit durch die Öffnung neben wenigstens einer Förderschaufel (66) in lotrechter Richtung und durch die andere Öffnung Flüssigkeit wenigstens teilweise in waagerechter Richtung leitet.

9. Gerät gemäß einem der Ansprüche 1 bis 8, dadurch gekennzeichnet, daß die Plattform (13) einen diese umschließenden Rand (37) aufweist, der normalerweise die Flüssigkeit des besagten Flüssigkeitskörpers (11) von den reflektierenden Mitteln (27) auf der Plattform (13) getrennt hält.

10. Gerät gemäß einem der Ansprüche 1 bis 9, dadurch gekennzeichnet, daß schwimmende Justiervorrichtungen (60) auf der besagten Plattform (13) befestigt sind, um die besagte Plattform in einer im wesentlichen waagerechten Lage zu halten, wenn besagte reflektierende Mittel (28) in die besagte Flüssigkeit eingetaucht sind.

11. Gerät gemäß Anspruch 10, dadurch gekennzeichnet, daß der Auftrieb der schwimmenden Vorrichtungen (60) je Höheneinheit von unten nach oben entlang den besagten schwimmenden Vorrichtungen (60) ansteigt.

12. Gerät gemäß Anspruch 11, dadurch gekennzeichnet, daß besagte schwimmende Vorrichtungen (60) verlängert ausgebildet und an der besagten Plattform (13) über ihre Länge befestigt sind, wobei besagte Vorrichtungen (60) von einem dünnwandigen unteren Ende der besagten Plattform (13) keilförmig zu einem dickerwandigen oberen Ende hin verlaufen.

13. Gerät gemäß einem der Ansprüche 1 bis 12, bei dem besagte reflektierende Mittel parabolische Reflektoren mit einer Brennlinie aufweisen, wobei die besagten Sammelvorrichtungen (29) im wesentlichen entlang der Brennlinie der jeweiligen Reflektoren (28) abgestützt sind.

14. Gerät gemäß Anspruch 13, dadurch gekennzeichnet, daß besagte reflektierende Mittel (29) aus einer Vielzahl von nebeneinander angeordneten, länglichen Reflektorelementen (28) bestehen, die einen im wesentlichen parabolischen reflektierenden Trog bilden.

15. Gerät nach gemäß Anspruch 14, dadurch gekennzeichnet, daß besagte Sammelvorrichtungen (29) mit einer Gitterkonstruktion (28) im wesentlichen entlang der Brennlinie des definierten reflektierenden Paraboltrogs abgestützt sind, wobei die besagte Gitterkonstruktion (30) des weiteren Reflektoren (31) aufweist, die Energiestrahlung auf die Kollektoren (29) lenken.

16. Gerät gemäß einem der Ansprüche 1 bis 15, dadurch gekennzeichnet. daß besagte Sammelvorrichtungen (29) längsverlaufende Rohre aufweisen, die für die Aufnahme eines Mittels zur Energieübertragung ausgebildet sind.

## Revendications

1. Un appareil de recueil de l'énergie radiante (10) comprenant :
un réservoir de liquide (11)
une plate-forme (13) flottant sur le liquide dans le dit réservoir de liquide (11) un dispositif permettant de déplacer la dite plate-forme (13) sur le dit liquide (11), un dispositif collecteur d'énergie radiante (29) supporté sur la dite plate-forme (13), le dit dispositif collecteur (29) portant un vecteur de transfert d'énergie ;
un dispositif réflecteur (28) sur la dite plate-forme, positionné de façon à réfléchir l'énergie radiante vers le dit dispositif collecteur d'énergie radiante (29), et à y concentrer l'énergie solaire, et caractérisé par un dispositif permettant de submerger de façon sélective le dit dispositif réflecteur (28) sous le liquide afin de protéger le dit dispositif réflecteur (28) contre les intempéries, le dit dispositif collecteur (29) restant au-dessus du dit liquide dans lequel le dit dispositif réflecteur (28) est immergé, de façon à ne pas perdre d'énergie par le dit dispositif collecteur (29).

2. L'appareil de la revendication 1, caractérisé par le fait que la dite plate-forme (13) possède une flottabilité suffisante pour supporter normalement le dit dispositif réflecteur (28) au-dessus du niveau du liquide (11).

3. L'appareil des revendications 1 et 2, caractérisé par le fait que le dit dispositif de submersion comprend :
un dispositif (22, 44) permettant de pomper le liquide sur la dite plate-forme, et un dispositif permettant de maintenir le liquide sur la dite plate-forme (13), et au-dessus du dit dispositif de concentration (27).

4. L'appareil de la revendication 3, caractérisé par le fait que le dit dispositif de maintien comprend un dispositif (22) permettant d'établir une dépression sous la dite plate-forme (13) pour maintenir la dite plate-forme (13) sous le dit niveau de liquide.

5. L'appareil de la revendication 3, caractérisé par le fait que le dit dispositif de pompage et de maintien comprend des hélices d'alimentation en liquide (44, 65) supportées sous la dite plate-forme (13), les dites hélices d'alimentation en liquide (16) communiquant avec des orifices (42, 70) traversant la dite plate-forme (13).

6. L'appareil de la revendication 5, caractérisé par le fait que des hélices à liquide opposées (66) sont associées à chacune des hélices d'alimentation en liquide (65), les dites hélices opposées (66) pouvant être actionnées avec les dites hélices d'alimentation (65) pour pousser le liquide dans une direction opposée aux dites hélices d'alimentation (65), et
des déflecteurs (71) entre les dites hélices d'alimentation (65) et les dites hélices opposées.

7. L'appareil de la revendication 6, caractérisé par le fait que les dites hélices d'alimentation (65) ont un pas opposé à celui des dites hélices opposées (66), et par le fait que les hélices d'alimentation associées (65) et les hélices opposées (66) sont fixées, axialement espacées, sur des arbres d'entraînement verticaux communs (67).

8. L'appareil de la revendication 5, caractérisé par le fait que le dit dispositif de déplacement comprend une conduite (72) associée à au moins une hélice (66) et reliant deux ouvertures de conduite, la dite conduite (72) dirigeant le liquide à travers l'ouverture proche d'au moins une hélice (66) en direction verticale, et dirigeant le liquide à travers l'autre ouverture au moins partiellement en direction horizontale.

9. L'appareil de l'une quelconque des revendications 1 à 8, caractérisé par le fait que la plate-forme (13) comprend une bordure (37) qui l'entoure pour séparer normalement la dite masse de liquide (11) du dispositif réflecteur (27) sur la plate-forme (13).

10. L'appareil de l'une quelconque des revendications 1 à 9, caractérisé par le fait qu'un dispositif de réglage de la flottabilité (60) est fixé à la dite plate-forme (13), pour maintenir la dite plate-forme (13) dans une attitude essentiellement horizontale lorsque le dit dispositif réflecteur (28) est submergé sous le dit liquide.

11. L'appareil de la revendication 10, caractérisé par le fait que la flottabilité du dispositif de flottabilité (60) par unité de longueur augmente du bas vers le haut du dit dispositif de flottabilité (60).

12. L'appareil des revendications 10 ou 11, caractérisé par le fait que les dits dispositifs de flottabilité (60) sont allongés et fixés à la dite plate-forme (13) sur leur longueur, les dits dispositifs (60) s'évasant depuis le côté étroit situé en bas, à proximité de la dite plate-forme (13), jusqu'au côté large en haut.

13. L'appareil de l'une quelconque des revendications 1 à 12, dans lequel le dit dispositif réflecteur (29) comprend des réflecteurs paraboliques ayant une ligne focale, et dans lequel le dit dispositif collecteur (29) est supporté environ à la ligne focale des réflecteurs respectifs (28).

14. L'appareil de la revendication 13, caractérisé par le fait que le dit dispositif réflecteur (29) comprend plusieurs éléments réflecteurs allongés (28) disposés côte à côte, définissant une forme concave réfléchissante essentiellement parabolique.

15. L'appareil de la revendication 14, caractérisé par le fait que le dit dispositif collecteur (29) est supporté par une structure (28) située essentiellement à la ligne focale de la forme concave réfléchissante définie, la dite structure (30) comportant en outre des réflecteurs (31) pour diriger l'énergie radiante vers les collecteurs (29).

16. L'appareil de l'une quelconque des revendications 1 à 15, caractérisé par le fait que le dit dispositif collecteur (29) comprend des tuyauteries allongées pour transporter le vecteur de transfert d'énergie.
